(19) **Europäisches Patentamt European Patent Office Office européen des brevets**

(11) **EP 4 270 884 B1**

(12) **EUROPEAN PATENT SPECIFICATION**

(45) Date of publication and mention
of the grant of the patent:
**22.07.2026 Bulletin 2026/30**

(21) Application number: **22170304.4**

(22) Date of filing: **27.04.2022**

(51) International Patent Classification (IPC):
***H04L 25/02*** *(2006.01)*

(52) Cooperative Patent Classification (CPC):
**H04L 25/0254; H04L 25/023**

(54) **CHANNEL ESTIMATION USING NEURAL NETWORKS**

KANALSCHÄTZUNG UNTER VERWENDUNG NEURONALER NETZE

ESTIMATION DE CANAL À L'AIDE DE RÉSEAUXDE NEURONES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2023 Bulletin 2023/44**

(73) Proprietor: **Nokia Technologies Oy 02610 Espoo (FI)**

(72) Inventors:
• **MOHAMMADI, Jafar Stuttgart (DE)**
• **ZIVKOVIC, Milan Stuttgart (DE)**

(74) Representative: **Varley, James Richard Venner Shipley LLP TIDE Bankside 8 Emerson Street London SE1 9DU (GB)**

(56) References cited:
WO-A1-2021/181002   WO-A1-2022/000365
WO-A1-2022/042845   CN-A- 113 285 899
US-A1- 2022 070 028

## Description

### Field

This specification relates to channel estimation in wireless systems, and in particular to the use of neural networks for channel estimation. This project leading to this application has received funding from the European Union's Horizon 2020 research and innovation programme under grant agreement No 10105956.

### Background

Accurate channel estimation, as well as precise Channel State Information (CSI) feedback, are the key technical prerequisites to realize the challenges of 6th Generation (6G) wireless communication both in PHYsical (PHY) and Medium Access Control (MAC) layers. Massive Multiple Input Multiple Output (MIMO) is among one of them. To estimate a channel, dedicated uplink (e.g. SRS, DMRS) and downlink (e.g. CSI-RS, DMRS (PDSCH)) signals are defined in the standard. However, the use of these signals reduces the overall spectral efficiency. Therefore, there is a trade-off between the signalling overhead used for channel estimation and accurate channel estimation.

CN 113 285 899 A discloses a time-varying channel estimation method and system based on deep learning. The method is based on a single hidden layer neural network, and comprises the following steps: firstly, fully utilizing channel change characteristics in historical channel information and other characteristics in a received pilot signal; and further improving the performance of channel estimation by using the advantages of least square estimation; secondly, carrying out offline training on a back propagation neural network by using the constructed sample, and then obtaining time-varying channel information in real time in an online mode.

WO 2022/000365 A1 discloses a method of wireless communication by a user equipment (UE) includes receiving a machine learning model from a base station. The method also includes inputting channel measurements obtained from reference signals to the machine learning model. The method further includes inputting parameters to the machine learning model. Based on the parameters and the channel measurements input to the machine learning model, the machine learning model infers a neural network output. Based on the neural network output, the method estimates characteristics of a current downlink data channel and/or predicts characteristics of a future downlink data channel.

### Summary

The invention is defined in the appended claims.

### Brief Description of the Drawings

FIG. 1 shows a schematic overview of a wireless communication system;
FIG. 2 shows a schematic overview of a method for aging a channel estimation signal;
FIG. 3 shows an example structure of a decoder neural network;
FIG. 4 shows an example structure of a time correlator neural;
FIG. 5 shows a schematic example of an example of a method of combining predictions of channel estimation signals;
FIG. 6 shows an overview of an example method 600 of training a neural network;
FIG. 7 shows a schematic overview of an example method for training/fine-tuning the neural networks of the channel estimation system on a user equipment;
FIG. 8 shows a schematic overview of a method for training/fine-tuning the neural networks of the channel estimation system at a base station;
FIG. 9 shows a flow diagram of an example method for aging a channel state estimation signal;
Figure 10 shows a schematic example of a system/apparatus for performing any of the methods described herein;
FIG. 11 shows a non-transitory media 1100 according to some embodiments.

### Detailed Description

Channel estimation at a user equipment (UE) is usually performed on dedicated channel estimation signals (e.g. CSI-RS, DMRS) that transmit known pilots at periodic intervals from the base station to the UE (and also arbitrary modes in some implementations). These signals may have varying bandwidths, and each may serve a particular purpose. The signalling overhead from these pilots occupies signalling resources (e.g. in time-frequency-space grid) such that it reduces the spectral efficiency.

There are several ways how to deal with this issue and improve the cellular system capacity.

One set of solutions is to use estimation theory and prediction methods to reduce the need for frequent updates of CSI-RS. However, relying on these methods is hard to adopt in practice due to high dependency of the prediction methods to the specific scenario, as prior knowledge of the channel, UE's speed, type of traffic, UE's location, topographic map of the environment etc. may be required.

The other set of solutions are related to system engineering of the wireless signalling rather than estimation theory. The method for channel estimation described herein are based on the availability of channel state information obtained via other signalling that is performed for different purposes. In essence, any known signal transmitted between the base station and UE could be repurposed for channel sounding. These signals may be side channel signals. Examples of such signals include the Synchronization Signal Block (SSB) and/or demodulation reference signals (DMRS).

The systems, methods and apparatus described herein may be to reduce the need for dedicated channel estimation signal updates, which in turn can increase the spectral efficiency of signals. Furthermore, an increase in throughput may be achieved by improving the channel state estimation via side-channel information.

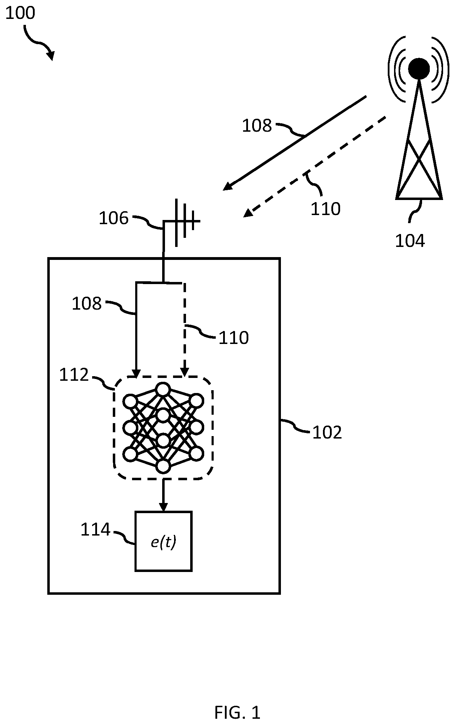

FIG. 1 shows a schematic overview of a wireless communication system 100. The system 100 comprises a user equipment (UE) 102 and a base station (BS) 104.

The UE 102 comprises a computing system (not shown) configured to process signals 108, 110 received from a base station 104 via a receiver 106 of the UE 102. The UE 102 may be a mobile computing device, such as a mobile phone (e.g. smartphone) or tablet device. The UE 102 may be laptop-computing device. Many other examples will be familiar to the person skilled I the art

The received signals comprise a channel estimation signal 108 (e.g. CSI-RS) and a further set of signals 110 that are typically used for some purpose other than channel estimation (e.g. SSB, DMRS). The base station 104 typically transmits channel estimation signals 108 with longer intervals between them than other types of signal 110, i.e. at a lower frequency.

The computing system processes the received signals 108, 110 using one or more neural networks 112 to estimate a current value of an error 114, $e(t)$, in channel estimation signals 108 received at an earlier time, $t-\tau$. The error estimate 114 can be used to update the channel estimation signals 108 received at an earlier time to produce a current estimate of the channel estimation signals 108.

The theoretical explanation is as follows: embedded in the channel estimation signals are frequency correlations (e.g. patterns) among the wideband channel. However, with time, the temporal correlation fades and Wiener/Kalman filtering only helps up to the coherent time of the channel, in realistic scenarios. Other types of signal, such as the narrowband SSBs, provide a temporal correlation pattern for time differences that does not have any update. Thus, a combination of the previous channel estimation signals and current values of other signals can be leveraged by a neural network to produce the correction term.

The UE 102 may use the estimated error 114 to determine a predicted current value of the channel estimation signals by adding the estimated error 114 to the channel estimation signals received at the previous time, $t-\tau$. The predicted channel estimation signals may then be used by the UE 102 to perform channel estimation.

Alternatively or additionally, the estimated error 114 may be used as a trigger by the UE 102 for obtaining an updated channel estimation signal from the base station 104. For example, the estimated error 114 may be compared to a threshold error value. If the estimated error 114 exceeds the threshold value, then the UE 102 obtains an updated channel estimation signal from the base station 104.

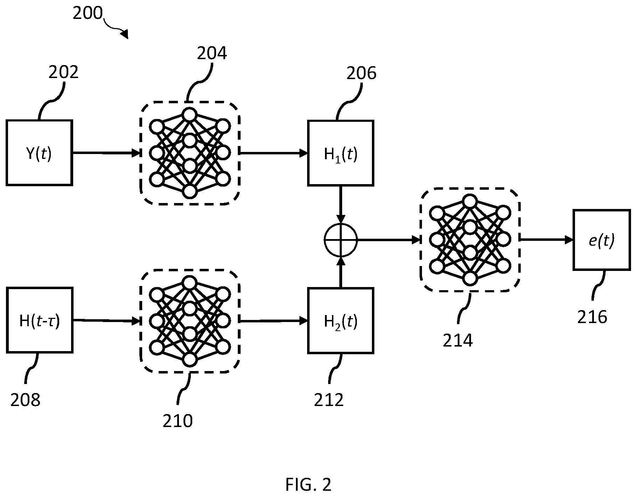

FIG. 2 shows a schematic overview of a method 200 for aging a channel estimation signal. The method may be performed by a user equipment, such as the UE described in relation to FIG. 1.

A first set of reference signals 202, Y(t), received at time t is input into a first neural network 204 (also referred to herein as a "decoder neural network"), which processes them to generate a first estimate of the channel estimation signal 206, $H_1(t)$, at time t. A set of previous channel estimation signals 208, $H(t-\tau)$ (e.g. channel estimation signals received at previous time $t-\tau$) is input into a second neural network 210 (also referred to herein as a "time correlator neural network"), which processes them to generate a second estimate of the channel estimation signal 212, $H_2(t)$, at time $t$. The first estimate of the channel estimation signal 206 and the second estimate of the channel estimation signal 212 are both input into a third neural network 214 (also referred to herein as a "combiner neural network"). The third neural network 214 combines the inputs in a non-linear way to produce an estimate of the current value of the error of the channel estimation signal 216, $e(t)$, defined as $e(t)=H(t-\tau)-H(t)$, where H(t) is the true value of the current channel estimation signal. The time t may be the current time.

The first set of reference signals 202 may comprise one or more sets of signals that are not dedicated to channel estimation, i.e. the first set of reference signals 202 may be reference signals for some other purpose, such as cell search and/or initial access procedures. Examples of such signals include, but are not limited to, SS-Block signals and/or DMRS. The first set of reference signals 202 may be received periodically at a higher frequency than the channel estimation signal. The first set of reference signals may also be referred to herein as "pilot signals" in some embodiments.

In implementations where SSB signals are used, the first set of reference signals 202, Y(t), may comprise a subset of the SSB signals and/or signals derived from the SSB signals. Examples of such signals include Secondary Synchronization Signals (SSS), Primary Synchronization Signals (PSS) and/or Physical Broadcast Channel (PBCH) signals. These may each be used alone or in combination to improve the channel estimation process. For example, PSS is based on an M- sequence for each cell that is constant throughout the cell, and can consequently be used as a pilot signal; SSS is similar to the PSS, i.e. the sequences are constant within a cell as it has cell ID information, therefore they can be used as pilot signals to estimate the channel; PBCH -DMRS is used as a pilot signal for equalization and later decoding of the information carried on PBCH part (e.g. MIB), an thus can be used as a pilot signal for channel estimation; and/or PBCH, which, after decoding the information using the PBCH-DMRS as pilots, can be used as pilot signals to estimate a larger bandwidth of the channel.

The channel estimation signal 208 may comprise a set of signals dedicated to channel estimation. Examples of such signals include, but are not limited to CSI-RS signals. The channel estimation signal 208 may be received periodically at a lower frequency than the first set of reference signals.

The first neural network 204 takes as input the first set of reference signals 202, e.g. the noisy SSB,

$Y_{SS-Block}(t) \in \mathbb{C}^{1 \times s_n}$, and outputs a first estimate of the current channel estimation signal, e.g. the full subcarrier (wideband) CSI-RS pre-estimate, $H_1(t) \in \mathbb{C}^{l \times s_w}$. In some embodiments, $s_n < s_w$, performs interpolation, or a matrix completion task, to estimate a higher dimensional vector from a lower dimension observation. The first neural network 204 essentially captures the correlations among adjacent subcarriers.

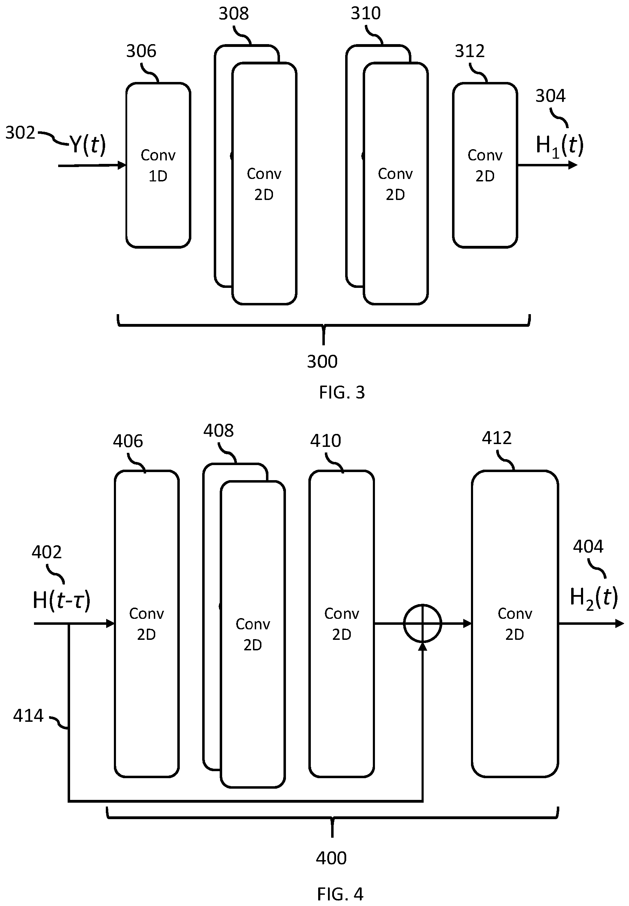

The first neural network 204 may be a convolutional neural network, as described below in relation to FIG. 3. Alternatively, the first neural network 204 may comprise one or more of: an LSTM network; an autoencoder; and/or a fully connected neural network.

The second neural network 210 takes as input previous outdated channel estimation signals 208, e.g. CSI-RSs

$H_{CSI-RS}(t - \tau) \in \mathbb{C}^{l \times s_w}$, and outputs a second estimate of the current channel estimation signal,

$H_1(t) \in \mathbb{C}^{l \times s_w}$. The second neural network 210 may be a convolutional neural network, as described below in relation to FIG. 4. The convolutional neural network may have one or more skip/residual connections. Alternatively, the second neural network 210 may comprise one or more of: an LSTM network; an autoencoder; and/or a fully connected neural network. In some embodiments, the time difference, $\tau$, may also be input into the neural network.

The third neural network 214 allows for a non-linear combination the estimate 206 output by the first neural network 204, $H_1(t)$, and the estimate 212 output by the second neural network 212, $H_2(t)$ to determine the error estimate 216, i.e. a correction term to be added later. Learning the estimation error 216 is easier that a corrected channel estimate directly. A difference between the first estimate 206 and second estimate 212 may be taken, and this difference is used as the input into the third neural network 214. Alternatively, the first estimate 206 and second estimate 212 may be jointly input into the third neural network 214, e.g. concatenated before input.

The third neural network 214 may be a fully connected neural network. For example, the third neural network 214 may have one or more fully connected layers (e.g. two or more layers). In some embodiments, the third neural network 214 has only one Relu function applied after the first layer.

FIG. 3 shows an example structure of a decoder neural network 300, i.e. an example of a first neural network used in FIG. 2. The decoder neural network 300 takes as input a first set of signals 302, Y(t), from a current time, t, and outputs an estimate 304 of the channel estimation signals at the current time, $H_1(t)$. It will be appreciated that alternative neural network structures may alternatively be used, whether convolutional or otherwise.

In the embodiment shown, the decoder neural network 300 is a convolutional neural network, comprising a plurality of convolutional layers (in this case four convolutional layers). The initial layer 306 is a one-dimensional convolutional layer, applying one or more (e.g. a plurality) of one-dimensional convolutional filters. The second layer 308 is a two-dimensional convolutional layer, applying one or more (e.g. a plurality) of two-dimensional convolutional filters to the output of the first layer 306. For example, the second layer 308 may apply six filters, each having a filter size of three-by-three. The third layer 310 is a two-dimensional convolutional layer, applying one or more (e.g. a plurality) of two-dimensional convolutional filters to the output of the second layer 308. For example, the third layer 310 may apply six filters, each having a filter size of three-by-three. The fourth layer 312 is a two-dimensional convolutional layer, applying one or more (e.g. a plurality) of two-dimensional convolutional filters to the output of the third layer 310 to generate the estimate 304 of the channel estimation signals at the current time, $H_1(t)$.

FIG. 4 shows an example structure of a time correlator neural network 400, i.e. an example of a second neural network used in FIG. 2. The time correlator neural network 400 takes as input channel estimation signals 402, H(t-$\tau$), from a previous time, t-$\tau$, and outputs an estimate 404 of the channel estimation signals at the current time, t. It will be appreciated that alternative neural network structures may alternatively be used, whether convolutional or otherwise.

In the embodiment shown, the time correlator neural network 400 is a residual neural network, comprising a plurality of convolutional layers (in this case four convolutional layers) and one or more residual connections 414 (in this case, one residual connection). The initial layer 406 is a two-dimensional convolutional layer, applying one or more (e.g. a plurality) of two-dimensional convolutional filters to the input channel estimation signals 402. The second layer 408 is a two-dimensional convolutional layer, applying one or more (e.g. a plurality) of two-dimensional convolutional filters to the output of the first layer 406. For example, the second layer 408 may apply six filters, each having a filter size of three-by-three. The third layer 410 is a two-dimensional convolutional layer, applying one or more (e.g. a plurality) of two-dimensional convolutional filters to the output of the second layer 408. For example, the third layer 410 may apply six filters, each having a filter size of three-by-three. The fourth layer 412 is a two-dimensional convolutional layer, applying one or more (e.g. a plurality) of two-dimensional convolutional filters to a combination of the input channel estimation signals 402 and the output of the third layer 410 to generate the estimate 404 of the channel estimation signals at the current time, $H_2(t)$. The input channel estimation signals 402 and the output of the third layer 410 may be combined by summing them.

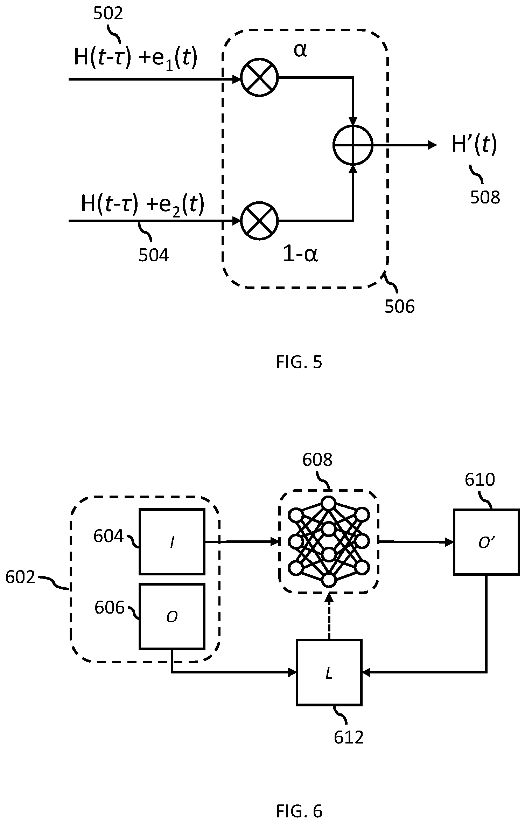

FIG. 5 shows a schematic example of an example of a method 500 of combining predictions of channel estimation signals.

A first prediction 502 of the channel estimate signals is obtained from a first set of reference signals, for example as described in relation to FIG. 2. A first prediction 502 of the channel estimate signals may be obtained by adding a first estimated error, $e_1(t)$, to previously received channel estimation signals. The first set of reference signals may, for example, be SS-Block signals.

A second prediction 504 of the channel estimate signals is obtained from a second set of reference signals, for example as described in relation to FIG. 2. A second prediction 504 of the channel estimate signals may be obtained by adding a second estimated error, $e_2(t)$, to previously received channel estimation signals. The second set of reference signals is distinct from the first set of reference signals. The second set of reference signals may, for example, be DMRSs.

The first prediction 502 and second prediction 504 of the channel estimation signals are combined using a weighted sum 506 to produce a combined prediction 508, H'($t$) of the channel estimation signals. The weighting may be based on the relative bandwidth, $\alpha$, of the first set of reference signals to the second set of reference signals.

In some embodiments, the UE may have the means to request on demand and/or set periodic of aperiodic intervals for determining channel estimation signal updates. As an additional use of the reference signals, the UE can monitor the evolution of the channel at the UE by using a subset of pilot extraction methods proposed earlier. Since the SSB is available on every beam direction periodically, they can be used at the UE to monitor the change in the channel due to speed, shadowing and blockage caused by others.

In some embodiments, the monitoring may be based on thresholding on single incidents. In this method, the new channel estimation at time $t$ using the first reference signals is compared with the channel estimates at time (t-1) obtained using the first reference signals. The comparison may, for example, be a norm-2 comparison or a cosine of vectors, e.g. angle of arrival. If the difference is larger than a threshold then, a request for an update of the channel estimation signal may be triggered. The threshold ay account for consider fluctuations of the noise as well. For example, the conditions for triggering the request may be given by:

$$\|H_1(t-1) - H_1(t)\|_2 \geq \gamma$$

Or

$$\frac{H_1(t-1) \cdot H_1(t)}{\|H_1(t)\|_2} \geq \alpha$$

Where $\alpha$ and $\gamma$ are threshold values.

In some embodiments, the monitoring may be based on thresholding with a moving average. The channel estimate at time $t$ obtained from the first reference signals is compared with a weighted average of $n$ previous channel estimates, e.g.:

$$\left\|\sum_{t+1-n}^{t-1} w_i H_1(i) - H_1(t)\right\|_2 \geq \alpha$$

Where $\alpha$ is a threshold value and $w_i$ are weights. In some embodiments, the weights may uniform, such that the weighted sum corresponds to a mean value. This would detriment the effect of zero-mean noise on the previous observation due to the weights on independent channel estimates.

In some embodiments, the monitoring may be based on thresholding with two moving averages. The mean of n previous channel estimates are compared with the mean of m <<n previous ones in addition to the current estimate, e.g.

$$\left\| \sum_{t+1-n}^{t-m+1} w_i H_1(i) - \sum_{t-m+1}^{t} w_i H_1(i) \right\|_2 \geq \alpha$$

Where $\alpha$ is a threshold value and $w_i$ are weights. In some embodiments, the weights may uniform, such that the weighted sum corresponds to a mean value.

In some embodiments, the monitoring may be based on observing the pattern via a Recurrent Neural Network or LSTM. A neural network may be trained to learn how to predict the next sample of channel estimates by observing the previous ones. The prediction error of the NN could be compared with a threshold to either trigger channel estimation request or not.

In the above, the choice of the threshold parameters, i.e. $\alpha$ or $\gamma$, may depend on the channel and prerequisites of the performance.

FIG. 6 shows an overview of an example method 600 of training a neural network. The method may be applied to train the first neural network of FIG. 2, the second neural network of FIG. 2, the third neural network of FIG. 2 and/or to train the first, second and third networks of FIG. 2 jointly.

Depending on the network being trained, a training sample 602 is obtained from a training dataset. The training sample comprises one or more known inputs 604, I, to the neural network and a corresponding ground truth output 606, O. The known input 604 is input into a neural network 608, which processes the input 604 according to current values of parameters (e.g. weights and biases) of the neural network 608 to generate a candidate output 610, O'. The candidate output 610 is compared to the ground truth output 606 using a loss/objective function 612. Based on the comparison, the parameters of the neural network 608 are updated. For example, an optimisation routine, such as stochastic gradient descent, may be applied to the loss/objective function 612 in order to determine the parameter updates. In some implementation, each set of updates may be determined based on a plurality of training examples 602, i.e. a batch of training data.

The loss/objective function 612 may be based on a difference between the candidate output 610 and the ground truth output 606, i.e. O'-O. Examples of such loss functions include, but are not limited to, an L2 or L1 loss, or a cosine loss.

The training may be iterated until a termination condition is satisfied. The termination condition may be a threshold number of training epochs and/or a threshold performance on a training dataset.

The method 600 may be used as an offline training method to train a set of base models. The first and second neural networks of FIG. 2 may each be pre-trained on respective training data using this method 600. Subsequently, the first, second and third of FIG. 2 may be jointly trained.

The first neural network may be trained on training data whose training examples 602 each comprise an input 604 comprising an example of a first reference signal measured at a respective capture time, $t$, (e.g. the SS-Block at time $t$) and an output comprising a corresponding set of channel estimation signals measured at the respective capture time (e.g. the CSI-RS signals at time $t$). The second neural network may be trained on training data whose training examples 602 each comprise an input 604 comprising an example of a channel estimation signal measured at a first respective capture time, $t-\tau$, (e.g. the CSI-RS at time $t-\tau$) and an output comprising a corresponding set of channel estimation signals measured at a second respective capture time that is later than the first respective capture time (e.g. the CSI-RS signals at time t).

In some embodiments, the training of the first and/or second neural networks may be performed with the ADAM optimiser, with a learning rate of 0.0001. The termination condition may be a threshold number of training epochs, e.g. a threshold of between 150 and 250, such as 200. Pre-mature gradient breaking may be used as a regularisation scheme. An adaptive batch size scheme may be used in some embodiments, where the batch size used varies depending on the training epoch. For example, for the first ten epochs a batch size of 32 may be used, then from 10th epoch to the 50th epoch a batch size of 64 may be used, with a batch size of 128 being used for the last 150 epochs. The use of variable epochs can result in a more efficient training, since at the beginning of the training the initialization of the weights is an important factor. If the weights are initialised at random, computing power should not be wasted on making the gradients more accurate by having larger batch sizes. Noisier gradients may help explore the parameter space more. However, in the final parts of training, where the parameters are closer to the optimal point, it may be better to use larger batch sizes to have less noisy gradients. At a high level, the parameter space is first explored, then exploited.

The third neural network be trained on training data whose training examples 602 each comprise an input 604 comprising outputs of the first and second neural networks and an output comprising a corresponding error in the channel estimation signals measured at the respective capture time (e.g. the difference between CSI-RS signals at time t and CSI-RS signals at time $t-\tau$). Alternatively, the third neural network be jointly trained with the first and second neural networks after an initial training phase where the first and second neural networks are trained individually. The training of the third neural network may be performed with the ADAM optimiser, with a learning rate of 0.0001. The termination condition may be a threshold number of training epochs, e.g. a threshold of between 10 and 50, such as 20. The batch size may be between 32 and 128, e.g. 64.

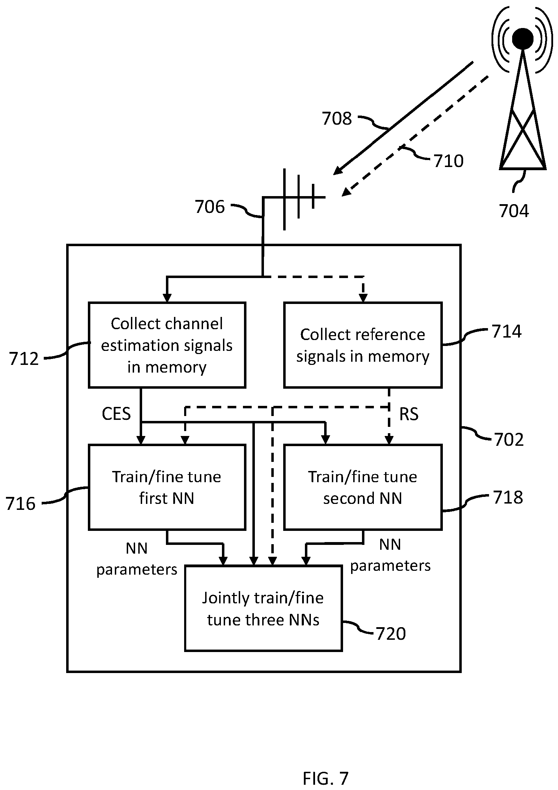

FIG. 7 shows a schematic overview of an example method 700 for training/fine-tuning the neural networks of the channel estimation system on a user equipment 702. The method is an example of an online training method. To improve the performance it is possible to train the neural networks used on a UE within a cell with a few samples collected in the same cell. These additional training could be done by fine-tuning a set of base neural network models.

The UE 702 receives channel estimation signals 708 and reference signals 710 from a base station 704 via a receiver 706, as described in relation to the FIG. 1. The received channel estimation signals 708 and reference signals 710 are stored in a memory/buffer once received 712, 714.

Once a threshold number of channel estimation signals 708 and reference signals 710 have been collected in the memory 712, 714, they are used to train/fine tune the neural networks used for aging channel estimation signals. The threshold number of samples may, for example, be between 5,000 and 15,000 samples (corresponding to a time of roughly 5-15 seconds), such as 10,000 samples (corresponding to a time of roughly 10 seconds).

The collected reference signals and channel estimation signals may be used to generate a first training dataset for training/fine tuning the first (i.e. decoder) neural network 716. The first training dataset comprises a plurality of training examples, each comprising reference signals collected at a respective time and a corresponding channel estimation signal collected at the respective time. The first training dataset is used to train/fine tune the first neural network 716, for example using the methods described in relation to FIG. 6.

The collected channel estimation signals may be used to generate a second training dataset for training/fine tuning the second (i.e. time correlator) neural network 718. The second training dataset comprises a plurality of training examples, each comprising pairs of channel estimation signals collected at different times. The second training dataset is used to train/fine tune the second neural network 718, for example using the methods described in relation to FIG. 6.

The parameters obtained by training the first neural network and second neural network may be used to initialise these networks for a joint training phase 720. A third training dataset may be generated from the collected reference signals and channel estimation signals. The third training dataset comprises a plurality of training examples; each comprising reference signals collected at a respective time, channel estimation signals from a time prior to the respective time, and an error value (e.g. a difference between the channel estimation signals from a time prior to the respective time and the channel estimation signals at the respective time). The third training dataset is used to train/fine tune the neural networks jointly 720, for example using the methods described in relation to FIG. 6.

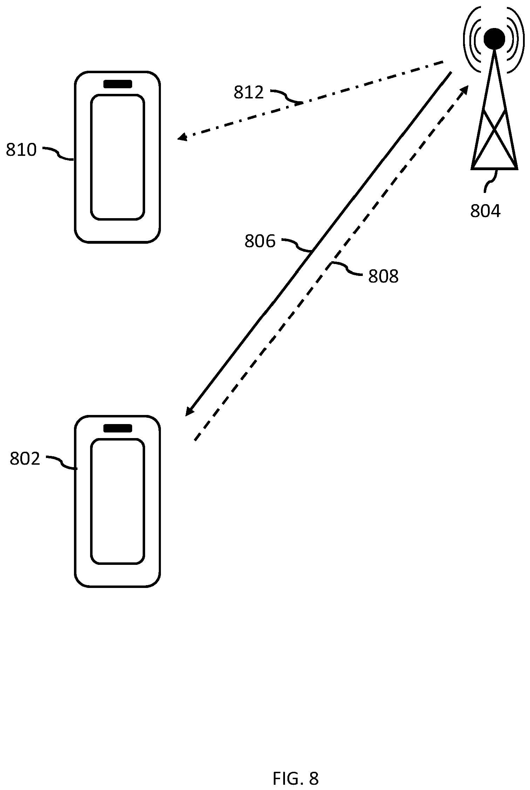

FIG. 8 shows a schematic overview of a method for training/fine-tuning the neural networks of the channel estimation system at a base station 804. The method comprises the base station updating the neural network weights, or simply sending an entirely new neural network for the task of improving the estimation of the prediction of the channel estimation signal within the cell. Since the performance of the neural networks depends on the cell that they deployed at (i.e. the channel properties of that cell), if the neural networks are specialised for the data acquired in a cell, the performance improves. Therefore, performance can be improved per cell by each base station 804 training, updating, and broadcasting its own neural network parameters.

Consequently, a new UE 810 arriving in a cell can receive the neural network weights upon its arrival to the cell, and thus there would be no need for UE to perform online/fine tuning. This download of the weights of the neural networks from the base station 804 to the new UE 810 could be done via a dedicated signalling, or as a data packet.

A first UE 802 (which may be referred to as a "collaborative UE") receives signals 806 from the base station 804. The signals comprise reference signals and channel estimation signals, which are stored in a memory/buffer of the first UE 802. The stored signals are uploaded 808 back to the base station 804 for the first UE, for example, periodically or when a threshold number of signals have been collected.

The base station 804 may receive such stored signals from a plurality of collaborative UEs 802, and use them to generate training datasets for training the channel estimation signal aging neural networks. The base station 804 uses the received signals to train the channel estimation signal aging neural networks, for example using any of the methods described in relation to FIG. 6. The parameters of the trained neural networks, e.g. weights and biases, are stored at the base station 804.

In other words, the based station 804 can train the neural networks with the help of the UEs 102, which upload their exact stored signals (e.g. SSB, DMRS, CSI-RS) dataset back to the base station 804 for training purposes. This does not have to be done often and a data from a few UEs 102 is enough for each cell to generate a training set. For example, the data may be collected at the beginning of establishing a cell and subsequently once per every few months. The base station 804 can request to collaborative UEs 802 to buffer, save, and upload the dataset while the collaborative UE 802 is within the cell. The collaborative UE 802 could update the base station 804 with the dataset during low traffic time, e.g. after mid-night, and when it is plugged-in. Each update may comprise roughly 300 MB of (this amount provides enough for a 100 batches of training data each batch with roughly 128 large samples; the data may also be quantized). Even on daily basis, this amount of data has no noticeable impact on the UE's battery charge or experience.

When a further UE 810 connects with the base station 804, the trained neural network parameters may be transmitted 812 from the base station 804 to the further UE 810. The further UE 810 initialises the channel estimation signal aging neural networks present on the further UE 810.

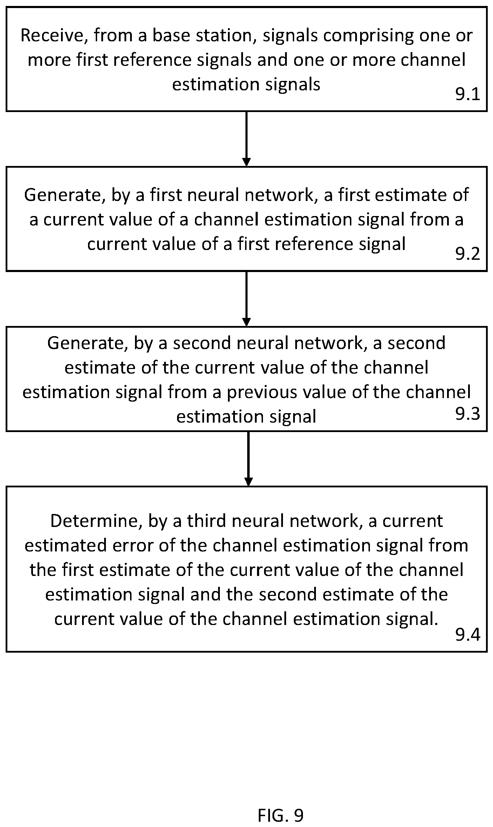

FIG. 9 shows a flow diagram of an example method for aging a channel state estimation signal. The method may be a computer implemented method performed by a UE.

At operation 9.1, one or more reference signals and one or more channel estimation signals are received at a UE. The UE may be a mobile computing device, such a smartphone, tablet or laptop.

The one or more reference signals comprise signals that are not dedicated to channel estimation, such as SS-Block signals and/or DMRSs. The one or more reference signals may be received by the UE more regularly than the channel estimation signals, i.e. at a higher frequency. The one or more channel estimation signals comprises dedicated channel estimation signals, such as CSI-RSs. The one or more channel estimation signals may be received less frequently than the one or more reference signals.

In some embodiments, the UE also receives parameter values (e.g. weights and biases) from the base station when it first connects to the base station.

At operation 9.2, a first estimate of current values of the one or more channel estimation signals is generated from current values of the one or more first reference signals using a first neural network. The first neural network may be a convolutional neural network that takes as input the one or more first reference signals and processes them through a plurality of convolutional layers to generate the first estimate of current values of the one or more channel estimation signals.

At operation 9.3, a second estimate of the current value of the channel estimation signal is generated from previous values of the one or more channel estimations signals using a second neural network. The second neural network may be a convolutional neural network that takes as input values of the one or more channel estimation signals that were obtained at a time prior to the current time and processes them through a plurality of convolutional layers to generate the second estimate of current values of the one or more channel estimation signals.. The second neural network may comprise one or more skip connections, i.e. be a residual neural network.

At operation 9.4, a current estimated error of the channel estimation signal is determined from the first estimate of the current value of the channel estimation signal and the second estimate of the current value of the channel estimation signal using a third neural network. The third neural network may be a fully connected neural network that takes as input a difference between the first and second estimates of the current value of the channel estimation signal and outputs the estimated error. Alternatively, the first and second estimates of the current value of the channel estimation signal may be jointly input into the third neural network.

The estimated error of the channel estimation signal may be used to determine one or more predicted current channel estimation signals by adding the estimated error to the one or more channel estimation signals that were obtained at a time prior to the current time. The one or more predicted current channel estimation signals may then be used to perform channel estimation by the UE.

In some embodiments, the current estimated error of the channel estimation signals may be compared to a threshold error value. If the threshold error value is exceeded, the UE requests a transmission of one o more updated channel estimation signals from the base station.

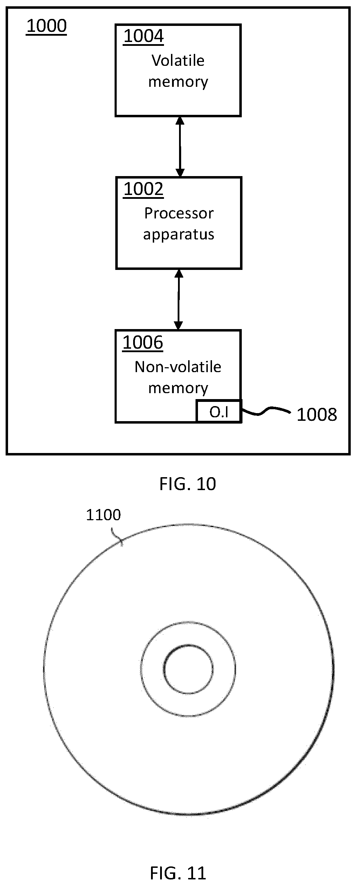

Figure 10 shows a schematic example of a system/apparatus 1000 for performing any of the methods described herein. The system/apparatus shown is an example of a computing device. It will be appreciated by the skilled person that other types of computing devices/systems may alternatively be used to implement the methods described herein, such as a distributed computing system. The system/apparatus 1000 may form at least a part of a user equipment.

The apparatus (or system) 1000 comprises one or more processors 1002. The one or more processors control operation of other components of the system/apparatus 1000. The one or more processors 1002 may, for example, comprise a general-purpose processor. The one or more processors 1002 may be a single core device or a multiple core device. The one or more processors 1002 may comprise a Central Processing Unit (CPU) or a graphical processing unit (GPU). Alternatively, the one or more processors 1002 may comprise specialised processing hardware, for instance a RISC processor or programmable hardware with embedded firmware. Multiple processors may be included.

The system/apparatus comprises a working or volatile memory 1004. The one or more processors may access the volatile memory 1004 in order to process data and may control the storage of data in memory. The volatile memory 504 may comprise RAM of any type, for example, Static RAM (SRAM) or Dynamic RAM (DRAM), or it may comprise Flash memory, such as an SD-Card.

The system/apparatus comprises a non-volatile memory 1006. The non-volatile memory 1006 stores a set of operation instructions 1008 for controlling the operation of the processors 1002 in the form of computer readable instructions. The non-volatile memory 1006 may be a memory of any kind such as a Read Only Memory (ROM), a Flash memory or a magnetic drive memory.

The one or more processors 1002 are configured to execute operating instructions 508 to cause the system/-apparatus to perform any of the methods described herein. The operating instructions 1008 may comprise code (i.e. drivers) relating to the hardware components of the system/apparatus 1000, as well as code relating to the basic operation of the system/apparatus 1000. Generally speaking, the one or more processors 1002 execute one or more instructions of the operating instructions 1008, which are stored permanently or semi-permanently in the non-volatile memory 1006, using the volatile memory 1004 to store temporarily data generated during execution of said operating instructions 1008.

FIG. 11 shows a non-transitory media 1100 according to some embodiments. The non-transitory media 1100 is a computer readable storage medium. It may be e.g. a CD, a DVD, a USB stick, a blue ray disk, etc. The non-transitory media 1100 stores computer program code causing an apparatus to perform operations described above when executed by a processor such as processor 1002 of FIG 10.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc.), these may comprise a computer processor, Application Specific Integrated Circuit (ASIC), field-programmable gate array (FPGA), and/or other hardware components that have been programmed in such a way to carry out the inventive function.

**Claims**

1. Apparatus (102) comprising one or more receivers configured to receive signals comprising one or more first reference signals (110) and one or more channel estimation signals (108), wherein the one or more channel estimation signals are dedicated channel estimation signals, and wherein the one or more first reference signals are not dedicated channel estimation signals, the apparatus configured to perform a method comprising:

   generating, by a first neural network (204), a first estimate of a current value of a channel estimate (206) from a current value of a first reference signal (202);
   generating, by a second neural network (210), a second estimate of the current value of the channel estimate (212) from a previous value of the channel estimate (208);
   determining, by a third neural network (214), a current estimated error (216) of the channel estimate from the first estimate of the current value of the channel estimate and the second estimate of the current value of the channel estimate, wherein the current error is an estimate of a difference between the current value of the channel estimate and the previous value of the channel estimate; and
   determining an additional estimate of the channel estimate by adding the current estimated error of the channel estimate and the previous value of the channel estimate.

2. The apparatus of claim 1, wherein the first neural network is a convolutional neural network and/or the second neural network is a residual neural network.

3. The apparatus of any preceding claim, wherein the first reference signal comprises a synchronisation signal block and/or a demodulation reference signal.

4. The apparatus of any preceding claim, wherein the method further comprises:

generating, by a fourth neural network, a third estimate of a current value of a channel estimate from a current value of a second reference signal, wherein the second reference signal is distinct from the first reference signal;

determining, by a fifth neural network, a further current estimated error of the channel estimatefrom the third estimate of the current value of the channel estimate and the second estimate of the current value of the channel estimate;

determining a further estimate of the channel estimatefrom the further current estimated error for the channel estimate and the previous value of the channel estimate; and

determining a final estimate of the channel estimate by taking a weighted average of the additional estimate of the channel estimate and the further estimate of the channel estimate, wherein weights of the weighted average depend on the relative bandwidth of the first reference signal and the second reference signal.

5. The apparatus of any preceding claim, wherein the method further comprises:

comparing the current estimated error of the channel estimate to a threshold error value;

in response to determining that that current estimated error of the channel estimate is greater than the threshold error value, requesting transmission of an updated channel estimation signal from a base station.

6. The apparatus of any preceding claim, wherein the apparatus is further configured to:

store a plurality of first reference signals received from a base station in a buffer;

store a plurality of channel estimation signals received from the base station in the buffer;

generate a training dataset from the first reference signals stored in the buffer and the channel estimation signals stored in the buffer; and

update parameters of the first neural network, the second neural network and/or the third neural network based on the generated training dataset.

7. The apparatus of any preceding claim, wherein the apparatus is further configured to receive, from the base station, parameters of the first neural network, the second neural network and/or the third neural network upon connection to a base station.

8. A computer implemented method comprising:

receiving, from a base station, signals comprising one or more first reference signals (110) and one or more channel estimation signals (108), wherein the one or more channel estimation signals are dedicated channel estimation signals, and wherein the one or more first reference signals are not dedicated channel estimation signals;

generating, by a first neural network (204), a first estimate of a current value of a channel estimate (206) from a current value of a first reference signal (202);

generating, by a second neural network (210), a second estimate of the current value of the channel estimate (212) from a previous value of the channel estimate (208);

determining, by a third neural network (214), a current estimated error (216) of the channel estimate from the first estimate of the current value of the channel estimate and the second estimate of the current value of the channel estimate, wherein the current error is an estimate of a difference between the current value of the channel estimate and the previous value of the channel estimate; and

determine an additional estimate of the channel estimate by adding the current estimated error of the channel estimate and the previous value of the channel estimate.

9. The method of claim 8, wherein the first neural network is a convolutional neural network and/or the second neural network is a residual neural network.

10. The method of any of claims 8 or 9, wherein the first reference signal comprises a synchronisation signal block and/or a demodulation reference signal.

11. The method of any of claims 8 to 10, wherein the method further comprises:

generating, by a fourth neural network, a third estimate of a current value of a channel estimation signal from a current value of a second reference signal, wherein the second reference signal is distinct from the first reference signal;

determining, by a fifth neural network, a further current estimated error of the channel estimate from the third estimate of the current value of the channel estimate and the second estimate of the current value of the channel estimate;

determining a further estimate of the channel estimate from the further current estimated error for the channel estimate and the previous value of the channel estimate; and

determining a final estimate of the channel estimate by taking a weighted average of the additional estimate of the channel estimate and the further estimate of the channel estimate, wherein weights of the weighted average depend on the relative bandwidth of the first reference signal and the second reference signal.

**12.** The method of any of claims 8 to 11, wherein the method further comprises:

comparing the current estimated error of the channel estimate to a threshold error value;

in response to determining that that current estimated error of the estimate is greater than the threshold error value, requesting transmission of an updated channel estimation signal from the base station.

**13.** The method of any of claims 8 to 12, wherein the method is further comprises:

storing a plurality of first reference signals received from the base station in a buffer;

storing a plurality of channel estimation signals received from the base station in the buffer;

generating a training dataset from the first reference signals stored in the buffer and the channel estimation signals stored in the buffer; and

updating parameters of the first neural network, the second neural network and/or the third neural network based on the generated training dataset.

**14.** The method of any of claims 8-13, wherein the method further comprises receiving, from a base station, parameters of the first neural network, the second neural network and/or the third neural network upon connection to the base station.

**15.** A computer program product comprising computer readable instructions that, when executed by a computer, cause the computer to perform a method comprising:

receiving, from a base station, signals comprising one or more first reference signals (110) and one or more channel estimation signals (108), wherein the one or more channel estimation signals are dedicated channel estimation signals, and wherein the one or more first reference signals are not dedicated channel estimation signals;

generating, by a first neural network (204), a first estimate of a current value of a channel estimate (206) from a current value of a first reference signal (202);

generating, by a second neural network (210), a second estimate of the current value of the channel estimate (212) from a previous value of the channel estimate (208);

determining, by a third neural network (214), a current estimated error (216) of the channel estimate from the first estimate of the current value of the channel estimate and the second estimate of the current value of the channel estimate, wherein the current error is an estimate of a difference between the current value of the channel estimate and the previous value of the channel estimate; and

determining an additional estimate of the channel estimate by adding the current estimated error of the channel estimate and the previous value of the channel estimate.

**Patentansprüche**

**1.** Vorrichtung (102), umfassend einen oder mehrere Empfänger, die konfiguriert sind, Signale zu empfangen, die ein oder mehrere erste Referenzsignale (110) und ein oder mehrere Kanalschätzsignale (108) umfassen, wobei die ein oder mehreren Kanalschätzsignale dedizierte Kanalschätzsignale sind und wobei die ein oder mehreren ersten Referenzsignale keine dedizierten Kanalschätzsignale sind, wobei die Vorrichtung konfiguriert ist, ein Verfahren auszuführen, das Folgendes umfasst:

Erzeugen, durch ein erstes neuronales Netz (204), einer ersten Schätzung eines aktuellen Werts einer Kanalschätzung (206) aus einem aktuellen Wert eines ersten Referenzsignals (202) ;

Erzeugen, durch ein zweites neuronales Netz (210), einer zweiten Schätzung des aktuellen Werts der Kanalschätzung (212) aus einem vorherigen Wert der Kanalschätzung (208) ;

Bestimmen, durch ein drittes neuronales Netz (214), eines aktuellen geschätzten Fehlers (216) der Kanalschätzung aus der ersten Schätzung des aktuellen Werts der Kanalschätzung und der zweiten Schätzung des aktuellen Werts der Kanalschätzung, wobei der aktuelle Fehler eine Schätzung einer Differenz zwischen dem aktuellen Wert der Kanalschätzung und dem vorherigen Wert der Kanalschätzung ist ; und

Bestimmen einer zusätzlichen Schätzung der Kanalschätzung durch Addition des aktuellen geschätzten Fehlers der Kanalschätzung und des vorherigen Werts der Kanalschätzung.

2. Vorrichtung nach Anspruch 1, wobei das erste neuronale Netz ein faltendes neuronales Netz ist und/oder das zweite neuronale Netz ein residuales neuronales Netz ist.

3. Vorrichtung nach einem der vorangehenden Ansprüche, wobei das erste Referenzsignal einen Synchronisationssignalblock und/oder ein Demodulations-Referenzsignal umfasst.

4. Vorrichtung nach einem der vorangehenden Ansprüche, wobei das Verfahren ferner Folgendes umfasst:

Erzeugen, durch ein viertes neuronales Netz, einer dritten Schätzung eines aktuellen Werts einer Kanalschätzung aus einem aktuellen Wert eines zweiten Referenzsignals, wobei das zweite Referenzsignal vom ersten Referenzsignal verschieden ist ;

Bestimmen, durch ein fünftes neuronales Netz, eines weiteren aktuellen geschätzten Fehlers der Kanalschätzung aus der dritten Schätzung des aktuellen Werts der Kanalschätzung und der zweiten Schätzung des aktuellen Werts der Kanalschätzung ;

Bestimmen einer weiteren Schätzung der Kanalschätzung aus dem weiteren aktuellen geschätzten Fehler für die Kanalschätzung und dem vorherigen Wert der Kanalschätzung ; und

Bestimmen einer endgültigen Schätzung der Kanalschätzung durch Bilden eines gewichteten Mittelwerts der zusätzlichen Schätzung der Kanalschätzung und der weiteren Schätzung der Kanalschätzung, wobei die Gewichte des gewichteten Mittelwerts von der relativen Bandbreite des ersten Referenzsignals und des zweiten Referenzsignals abhängen.

5. Vorrichtung nach einem der vorangehenden Ansprüche, wobei das Verfahren ferner Folgendes umfasst:

Vergleichen des aktuellen geschätzten Fehlers der Kanalschätzung mit einem Fehlerschwellenwert ;

als Reaktion auf die Feststellung, dass der aktuelle geschätzte Fehler der Kanalschätzung größer als der Fehlerschwellenwert ist, Anfordern einer Übertragung eines aktualisierten Kanalschätzsignals von einer Basisstation.

6. Vorrichtung nach einem der vorangehenden Ansprüche, wobei die Vorrichtung ferner konfiguriert ist:

eine Mehrzahl von ersten Referenzsignalen, die von einer Basisstation empfangen wurden, in einem Puffer zu speichern ;

eine Mehrzahl von Kanalschätzsignalen, die von der Basisstation empfangen wurden, in dem Puffer zu speichern ;

einen Trainingsdatensatz aus den in dem Puffer gespeicherten ersten Referenzsignalen und den in dem Puffer gespeicherten Kanalschätzsignalen zu erzeugen ; und

Parameter des ersten neuronalen Netzes, des zweiten neuronalen Netzes und/oder des dritten neuronalen Netzes anhand des erzeugten Trainingsdatensatzes zu aktualisieren.

7. Vorrichtung nach einem der vorangehenden Ansprüche, wobei die Vorrichtung ferner konfiguriert ist, von der Basisstation Parameter des ersten neuronalen Netzes, des zweiten neuronalen Netzes und/oder des dritten neuronalen Netzes bei der Verbindung mit einer Basisstation zu empfangen.

8. Computerimplementiertes Verfahren, umfassend:

Empfangen, von einer Basisstation, von Signalen, die ein oder mehrere erste Referenzsignale (110) und ein oder mehrere Kanalschätzsignale (108) umfassen, wobei die ein oder mehreren Kanalschätzsignale dedizierte Kanalschätzsignale sind und wobei die ein oder mehreren ersten Referenzsignale keine dedizierten Kanalschätzsignale sind ;

Erzeugen, durch ein erstes neuronales Netz (204), einer ersten Schätzung eines aktuellen Werts einer Kanalschätzung (206) aus einem aktuellen Wert eines ersten Referenzsignals (202) ;

Erzeugen, durch ein zweites neuronales Netz (210), einer zweiten Schätzung des aktuellen Werts der Kanalschätzung (212) aus einem vorherigen Wert der Kanalschätzung (208) ;

Bestimmen, durch ein drittes neuronales Netz (214), eines aktuellen geschätzten Fehlers (216) der Kanalschätzung aus der ersten Schätzung des aktuellen Werts der Kanalschätzung und der zweiten Schätzung des aktuellen Werts der Kanalschätzung, wobei der aktuelle Fehler eine Schätzung einer Differenz zwischen dem aktuellen Wert der Kanalschätzung und dem vorherigen Wert der Kanalschätzung ist ; und

Bestimmen einer zusätzlichen Schätzung der Kanalschätzung durch Addition des aktuellen geschätzten Fehlers der Kanalschätzung und des vorherigen Werts der Kanalschätzung.

9. Verfahren nach Anspruch 8, wobei das erste neuronale Netz ein faltendes neuronales Netz ist und/oder das zweite neuronale Netz ein residuales neuronales Netz ist.

10. Verfahren nach einem der Ansprüche 8 oder 9, wobei das erste Referenzsignal einen Synchronisationssignalblock und/oder ein Demodulations-Referenzsignal umfasst.

11. Verfahren nach einem der Ansprüche 8 bis 10, wobei das Verfahren ferner Folgendes umfasst:

Erzeugen, durch ein viertes neuronales Netz, einer dritten Schätzung eines aktuellen Werts eines Kanalschätzsignals aus einem aktuellen Wert eines zweiten Referenzsignals, wobei das zweite Referenzsignal vom ersten Referenzsignal verschieden ist ;

Bestimmen, durch ein fünftes neuronales Netz, eines weiteren aktuellen geschätzten Fehlers der Kanalschätzung aus der dritten Schätzung des aktuellen Werts der Kanalschätzung und der zweiten Schätzung des aktuellen Werts der Kanalschätzung ;

Bestimmen einer weiteren Schätzung der Kanalschätzung aus dem weiteren aktuellen geschätzten Fehler für die Kanalschätzung und dem vorherigen Wert der Kanalschätzung ; und

Bestimmen einer endgültigen Schätzung der Kanalschätzung durch Bilden eines gewichteten Mittelwerts der zusätzlichen Schätzung der Kanalschätzung und der weiteren Schätzung der Kanalschätzung, wobei die Gewichte des gewichteten Mittelwerts von der relativen Bandbreite des ersten Referenzsignals und des zweiten Referenzsignals abhängen.

12. Verfahren nach einem der Ansprüche 8 bis 11, wobei das Verfahren ferner Folgendes umfasst:

Vergleichen des aktuellen geschätzten Fehlers der Kanalschätzung mit einem Fehlerschwellenwert ;

als Reaktion auf die Feststellung, dass der aktuelle geschätzte Fehler der Schätzung größer als der Fehlerschwellenwert ist, Anfordern einer Übertragung eines aktualisierten Kanalschätzsignals von der Basisstation.

13. Verfahren nach einem der Ansprüche 8 bis 12, wobei das Verfahren ferner Folgendes umfasst:

Speichern einer Mehrzahl von ersten Referenzsignalen, die von der Basisstation empfangen wurden, in einem Puffer ;

Speichern einer Mehrzahl von Kanalschätzsignalen, die von der Basisstation empfangen wurden, in dem Puffer ;

Erzeugen eines Trainingsdatensatzes aus den in dem Puffer gespeicherten ersten Referenzsignalen und den in dem Puffer gespeicherten Kanalschätzsignalen ; und

Aktualisieren von Parametern des ersten neuronalen Netzes, des zweiten neuronalen Netzes und/oder des dritten neuronalen Netzes anhand des erzeugten Trainingsdatensatzes.

14. Verfahren nach einem der Ansprüche 8 bis 13, wobei das Verfahren ferner das Empfangen, von einer Basisstation, von Parametern des ersten neuronalen Netzes, des zweiten neuronalen Netzes und/oder des dritten neuronalen Netzes bei der Verbindung mit der Basisstation umfasst.

15. Computerprogrammprodukt, umfassend computerlesbare Anweisungen, die, wenn sie von einem Computer ausgeführt werden, den Computer veranlassen, ein Verfahren auszuführen, das Folgendes umfasst:

Empfangen, von einer Basisstation, von Signalen, die ein oder mehrere erste Referenzsignale (110) und ein oder mehrere Kanalschätzsignale (108) umfassen, wobei die ein oder mehreren Kanalschätzsignale dedizierte Kanalschätzsignale sind und wobei die ein oder mehreren ersten Referenzsignale keine dedizierten Kanalschätzsignale sind ;

Erzeugen, durch ein erstes neuronales Netz (204), einer ersten Schätzung eines aktuellen Werts einer Kanalschätzung (206) aus einem aktuellen Wert eines ersten Referenzsignals(202) ;

Erzeugen, durch ein zweites neuronales Netz (210), einer zweiten Schätzung des aktuellen Werts der Kanalschätzung (212) aus einem vorherigen Wert der Kanalschätzung (208) ;

Bestimmen, durch ein drittes neuronales Netz (214), eines aktuellen geschätzten Fehlers (216) der Kanalschätzung aus der ersten Schätzung des aktuellen Werts der Kanalschätzung und der zweiten Schätzung des aktuellen Werts der Kanalschätzung, wobei der aktuelle Fehler eine Schätzung einer Differenz zwischen dem aktuellen Wert der Kanalschätzung und dem vorherigen Wert der Kanalschätzung ist ; und

Bestimmen einer zusätzlichen Schätzung der Kanalschätzung durch Addition des aktuellen geschätzten Fehlers der Kanalschätzung und des vorherigen Werts der Kanalschätzung.

**Revendications**

1. Appareil (102) comprenant un ou plusieurs récepteurs configurés pour recevoir des signaux comprenant un ou plusieurs premiers signaux de référence (110) et un ou plusieurs signaux d'estimation de canal (108), dans lequel les un ou plusieurs signaux d'estimation de canal sont des signaux d'estimation de canal dédiés, et dans lequel les un ou plusieurs premiers signaux de référence ne sont pas des signaux d'estimation de canal dédiés, l'appareil étant configuré pour exécuter un procédé comprenant :

la génération, par un premier réseau de neurones (204), d'une première estimation d'une valeur courante d'une estimation de canal (206) à partir d'une valeur courante d'un premier signal de référence (202) ;

la génération, par un deuxième réseau de neurones (210), d'une deuxième estimation de la valeur courante de l'estimation de canal (212) à partir d'une valeur précédente de l'estimation de canal (208) ;

la détermination, par un troisième réseau de neurones (214), d'une erreur estimée courante (216) de l'estimation de canal à partir de la première estimation de la valeur courante de l'estimation de canal et de la deuxième estimation de la valeur courante de l'estimation de canal, dans laquelle l'erreur courante est une estimation d'une différence entre la valeur courante de l'estimation de canal et la valeur précédente de l'estimation de canal ; et

la détermination d'une estimation supplémentaire de l'estimation de canal en ajoutant l'erreur estimée courante de l'estimation de canal et la valeur précédente de l'estimation de canal.

2. L'appareil selon la revendication 1, dans lequel le premier réseau de neurones est un réseau de neurones convolutif et/ou le deuxième réseau de neurones est un réseau de neurones résiduel.

3. L'appareil selon l'une quelconque des revendications précédentes, dans lequel le premier signal de référence comprend un bloc de signal de synchronisation et/ou un signal de référence de démodulation.

4. L'appareil selon l'une quelconque des revendications précédentes, dans lequel le procédé comprend en outre :

la génération, par un quatrième réseau de neurones, d'une troisième estimation d'une valeur courante d'une estimation de canal à partir d'une valeur courante d'un deuxième signal de référence, dans laquelle le deuxième signal de référence est distinct du premier signal de référence ;

la détermination, par un cinquième réseau de neurones, d'une autre erreur estimée courante de l'estimation de canal à partir de la troisième estimation de la valeur courante de l'estimation de canal et de la deuxième estimation de la valeur courante de l'estimation de canal ;

la détermination d'une autre estimation de l'estimation de canal à partir de l'autre erreur estimée courante pour l'estimation de canal et de la valeur précédente de l'estimation de canal ; et

la détermination d'une estimation finale de l'estimation de canal en prenant une moyenne pondérée de l'estimation supplémentaire de l'estimation de canal et de l'autre estimation de l'estimation de canal, dans laquelle les poids de la moyenne pondérée dépendent de la largeur de bande relative du premier signal de référence et du deuxième signal de référence.

5. L'appareil selon l'une quelconque des revendications précédentes, dans lequel le procédé comprend en outre :

la comparaison de l'erreur estimée courante de l'estimation de canal à une valeur d'erreur seuil ;

en réponse à la détermination que l'erreur estimée courante de l'estimation de canal est supérieure à la valeur d'erreur seuil, la demande de transmission d'un signal d'estimation de canal mis à jour provenant d'une station de base.

**6.** L'appareil selon l'une quelconque des revendications précédentes, dans lequel l'appareil est en outre configuré pour :

mémoriser une pluralité de premiers signaux de référence reçus d'une station de base dans un tampon ;
mémoriser une pluralité de signaux d'estimation de canal reçus de la station de base dans le tampon ;
générer un ensemble de données d'apprentissage à partir des premiers signaux de référence mémorisés dans le tampon et des signaux d'estimation de canal mémorisés dans le tampon ; et
mettre à jour les paramètres du premier réseau de neurones, du deuxième réseau de neurones et/ou du troisième réseau de neurones sur la base de l'ensemble de données d'apprentissage généré.

**7.** L'appareil selon l'une quelconque des revendications précédentes, dans lequel l'appareil est en outre configuré pour recevoir, en provenance de la station de base, les paramètres du premier réseau de neurones, du deuxième réseau de neurones et/ou du troisième réseau de neurones lors de la connexion à une station de base.

**8.** Procédé mis en œuvre par ordinateur comprenant :

la réception, en provenance d'une station de base, de signaux comprenant un ou plusieurs premiers signaux de référence (110) et un ou plusieurs signaux d'estimation de canal (108), dans lequel les un ou plusieurs signaux d'estimation de canal sont des signaux d'estimation de canal dédiés, et dans lequel les un ou plusieurs premiers signaux de référence ne sont pas des signaux d'estimation de canal dédiés ;
la génération, par un premier réseau de neurones (204), d'une première estimation d'une valeur courante d'une estimation de canal (206) à partir d'une valeur courante d'un premier signal de référence (202) ;
la génération, par un deuxième réseau de neurones (210), d'une deuxième estimation de la valeur courante de l'estimation de canal (212) à partir d'une valeur précédente de l'estimation de canal (208) ;
la détermination, par un troisième réseau de neurones (214), d'une erreur estimée courante (216) de l'estimation de canal à partir de la première estimation de la valeur courante de l'estimation de canal et de la deuxième estimation de la valeur courante de l'estimation de canal, dans laquelle l'erreur courante est une estimation d'une différence entre la valeur courante de l'estimation de canal et la valeur précédente de l'estimation de canal ; et
la détermination d'une estimation supplémentaire de l'estimation de canal en ajoutant l'erreur estimée courante de l'estimation de canal et la valeur précédente de l'estimation de canal.

**9.** Le procédé selon la revendication 8, dans lequel le premier réseau de neurones est un réseau de neurones convolutif et/ou le deuxième réseau de neurones est un réseau de neurones résiduel.

**10.** Le procédé selon l'une quelconque des revendications 8 ou 9, dans lequel le premier signal de référence comprend un bloc de signal de synchronisation et/ou un signal de référence de démodulation.

**11.** Le procédé selon l'une quelconque des revendications 8 à 10, dans lequel le procédé comprend en outre :

la génération, par un quatrième réseau de neurones, d'une troisième estimation d'une valeur courante d'un signal d'estimation de canal à partir d'une valeur courante d'un deuxième signal de référence, dans laquelle le deuxième signal de référence est distinct du premier signal de référence ;
la détermination, par un cinquième réseau de neurones, d'une autre erreur estimée courante de l'estimation de canal à partir de la troisième estimation de la valeur courante de l'estimation de canal et de la deuxième estimation de la valeur courante de l'estimation de canal ;
la détermination d'une autre estimation de l'estimation de canal à partir de l'autre erreur estimée courante pour l'estimation de canal et de la valeur précédente de l'estimation de canal ; et
la détermination d'une estimation finale de l'estimation de canal en prenant une moyenne pondérée de l'estimation supplémentaire de l'estimation de canal et de l'autre estimation de l'estimation de canal, dans laquelle les poids de la moyenne pondérée dépendent de la largeur de bande relative du premier signal de référence et du deuxième signal de référence.

**12.** Le procédé selon l'une quelconque des revendications 8 à 11, dans lequel le procédé comprend en outre :

la comparaison de l'erreur estimée courante de l'estimation de canal à une valeur d'erreur seuil ;
en réponse à la détermination que l'erreur estimée courante de l'estimation est supérieure à la valeur d'erreur seuil, la demande de transmission d'un signal d'estimation de canal mis à jour provenant de la station de base.

**13.** Le procédé selon l'une quelconque des revendications 8 à 12, dans lequel le procédé comprend en outre :

la mémorisation d'une pluralité de premiers signaux de référence reçus de la station de base dans un tampon ;

la mémorisation d'une pluralité de signaux d'estimation de canal reçus de la station de base dans le tampon ;

la génération d'un ensemble de données d'apprentissage à partir des premiers signaux de référence mémorisés dans le tampon et des signaux d'estimation de canal mémorisés dans le tampon ; et

la mise à jour des paramètres du premier réseau de neurones, du deuxième réseau de neurones et/ou du troisième réseau de neurones sur la base de l'ensemble de données d'apprentissage généré.

14. Le procédé selon l'une quelconque des revendications 8 à 13, dans lequel le procédé comprend en outre la réception, en provenance d'une station de base, des paramètres du premier réseau de neurones, du deuxième réseau de neurones et/ou du troisième réseau de neurones lors de la connexion à la station de base.

15. Produit programme d'ordinateur comprenant des instructions lisibles par ordinateur qui, lorsqu'elles sont exécutées par un ordinateur, amènent l'ordinateur à exécuter un procédé comprenant :

la réception, en provenance d'une station de base, de signaux comprenant un ou plusieurs premiers signaux de référence (110) et un ou plusieurs signaux d'estimation de canal (108),

dans lequel les un ou plusieurs signaux d'estimation de canal sont des signaux d'estimation de canal dédiés, et dans lequel les un ou plusieurs premiers signaux de référence ne sont pas des signaux d'estimation de canal dédiés ;

la génération, par un premier réseau de neurones (204), d'une première estimation d'une valeur courante d'une estimation de canal (206) à partir d'une valeur courante d'un premier signal de référence (202) ;

la génération, par un deuxième réseau de neurones (210), d'une deuxième estimation de la valeur courante de l'estimation de canal (212) à partir d'une valeur précédente de l'estimation de canal (208) ;

la détermination, par un troisième réseau de neurones (214), d'une erreur estimée courante (216) de l'estimation de canal à partir de la première estimation de la valeur courante de l'estimation de canal et de la deuxième estimation de la valeur courante de l'estimation de canal, dans laquelle l'erreur courante est une estimation d'une différence entre la valeur courante de l'estimation de canal et la valeur précédente de l'estimation de canal ; et

la détermination d'une estimation supplémentaire de l'estimation de canal en ajoutant l'erreur estimée courante de l'estimation de canal et la valeur précédente de l'estimation de canal.

FIG. 1

FIG. 2

FIG. 3

FIG. 4

FIG. 5

FIG. 6

FIG. 7

FIG. 8

Receive, from a base station, signals comprising one or more first reference signals and one or more channel estimation signals

9.1

Generate, by a first neural network, a first estimate of a current value of a channel estimation signal from a current value of a first reference signal

9.2

Generate, by a second neural network, a second estimate of the current value of the channel estimation signal from a previous value of the channel estimation signal

9.3

Determine, by a third neural network, a current estimated error of the channel estimation signal from the first estimate of the current value of the channel estimation signal and the second estimate of the current value of the channel estimation signal.

9.4

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113285899 A

- WO 2022000365 A1